Europäisches Patentamt

European Patent Office

Office européen des brevets

(19)

(11) **EP 1 548 717 A1**

(12) **EUROPEAN PATENT APPLICATION**
published in accordance with Art. 158(3) EPC

(43) Date of publication:
   **29.06.2005  Bulletin 2005/26**

(51) Int Cl.⁷: **G11B 7/09**, G11B 7/12

(21) Application number: **03755688.3**

(86) International application number:
   **PCT/JP2003/012428**

(22) Date of filing: **29.09.2003**

(87) International publication number:
   **WO 2004/029947 (08.04.2004 Gazette 2004/15)**

(84) Designated Contracting States:
   **AT BE BG CH CY CZ DE DK EE ES FI FR GB GR
   HU IE IT LI LU MC NL PT RO SE SI SK TR**

(30) Priority:  **30.09.2002  JP 2002285243**

(71) Applicant: **Pioneer Corporation
   Tokyo 153-8654 (JP)**

(72) Inventor: **MATSUDA, Takehiro
   Pioneer Corporation
   Tsurugashima-shi, Saitama350-2201 (JP)**

(74) Representative: **Tappe, Hartmut
   Böck, Tappe, Kirschner,
   Patent- und Rechtsanwälte,
   Kantstrasse 40
   97074 Würzburg (DE)**

(54)   **OPTICAL DISK REPRODUCING DEVICE, OBJECT LENS, PROTECTION MEMBER AND OPTICAL DISK REPRODUCING METHOD**

(57)   An optical disc reproducing apparatus capable of preventing a contact between an objective lens and an optical disc disposed very close to each other to eliminate the damage-caused functional failures of the objective lens and the optical disc, and permitting proper focus control and tracking control to ensure high-reliability data recording/reading. A lens protecting part (116) protruding in an optical disc direction is provided on the surface facing the optical disc of the objective lens (103), and at least one recess (116a) for establishing communication between the inner and outer sides of the ring is formed in the lens protecting part (116).

Fig. 7

**Description**

[Technical Field]

The present invention relates to an optical disc reproducing apparatus, an obj ective lens, a protecting member and an optical disc reproducing method.

[Background Art]

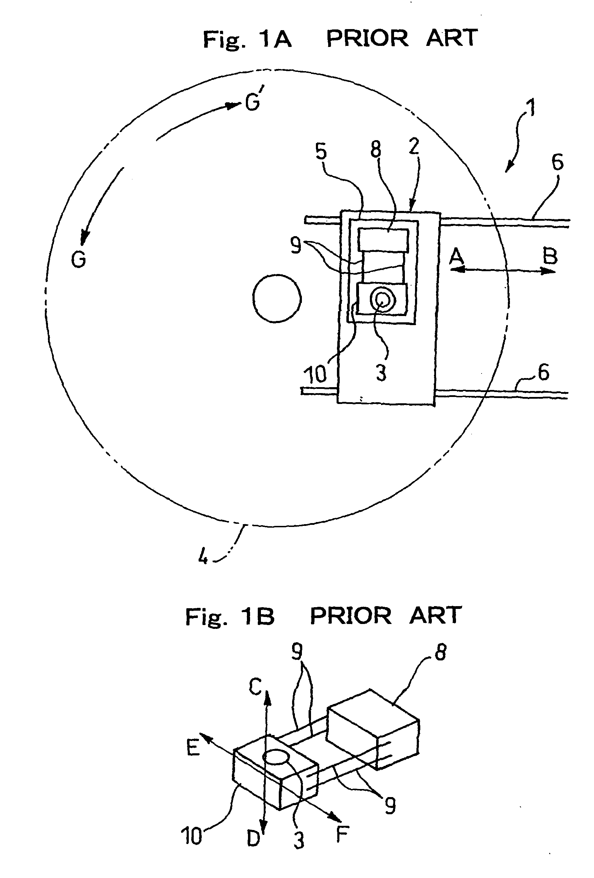

As shown in Fig 1A, according to the prior art, an optical disc recording/reproducing apparatus 1 which optically records data with a laser beam or the like on an optical disc, which is an recording medium, and reads and reproduces data recorded on the optical disc causes a laser beam emitted from a laser generating device (not shown), such as a semiconductor laser oscillator, to be converged by an objective lens 3 disposed on a pickup body 2 to irradiate a recording medium 4, such as an optical disc, to record data thereon or to read data recorded thereon.

The pickup body 2 is disposed to be shiftable in the radial direction of the recording medium 4 in an optical disc form (in the direction of arrow A or B), guided by a guide shaft 6.

To the pickup body 2 is fixed a yoke 5 and to the yoke 5 is fixed a fixed part 8.

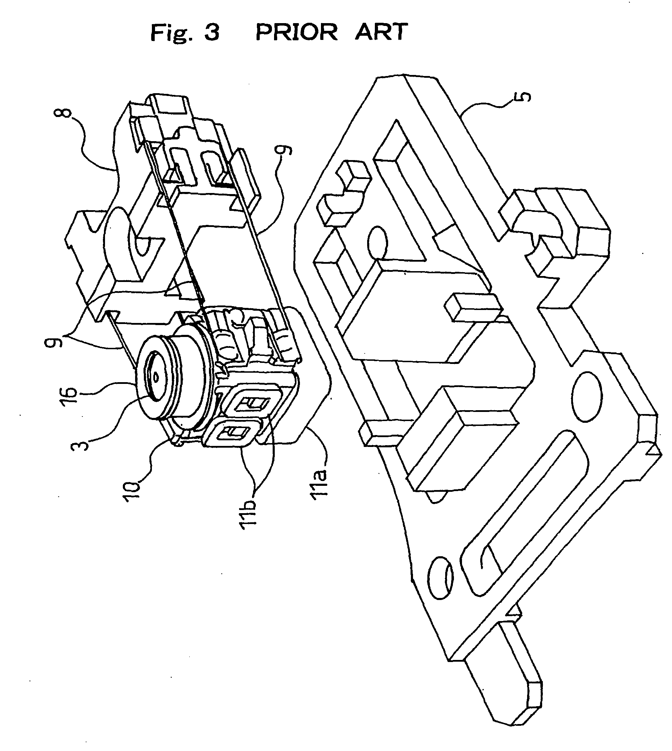

As shown in Fig 1B, Fig 2 and Fig 3, four supporting springs 9, which are members elastic in the lengthwise direction are firmly stuck to the fixed part 8 in the horizontal direction. At the tips of the four supporting springs 9 is arranged a movable part 10, which is supported by the supporting springs 9 to be oscillatable in the directions of arrow C or D and of arrow E or F.

In the movable part 10 the objective lens 3 is arranged opposite the recordingmedium 4, and a raisingmirror (not shown) is disposed underneath the objective lens 3, so that the laser beam from the laser generating device be reflected by the raising mirror to bring it into incidence on the objective lens 3. The laser beam is narrowed down by the objective lens 3 to focus on the recording face of the recording medium 4.

Underneath the movable part 10 is arranged a focusing coil 11a and on a side of it is disposed a tracking coil 11b so that the movable part 10 be slightly shifted in the direction of arrow C or D to control focusing by electrifying the focusing coil 11a and be slightly shifted in the direction of arrow E or F to control tracking by electrifying the tracking coil 11b.

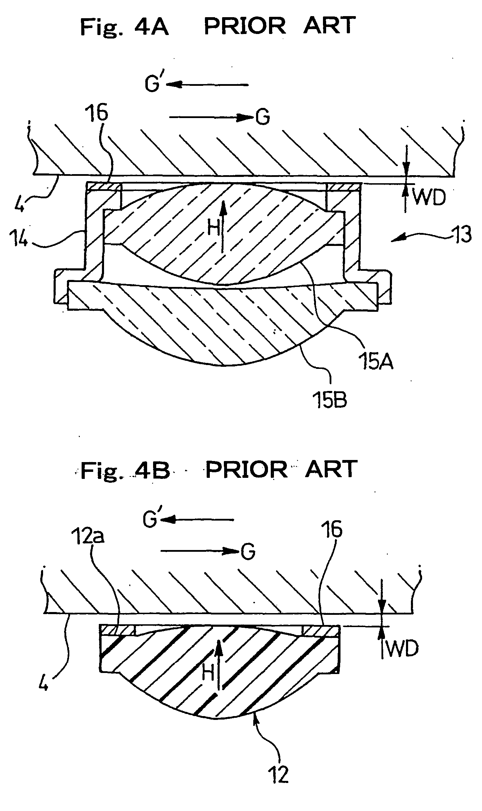

As shown in Figs 4, a single lens 12 (see Fig 4B) made of glass, transparent plastic or the like or a paired lens 13 (see Fig 4A) is used as the objective lens 3. The paired lens 13 is configured of two lenses 15A and 15B built into a mirror tube 14 which is formed of metals, plastic or the like. The tube 14 may be structurally integrated with the lens 15A or the lens 15B.

Usually an optical disc recording/reproducing system requires a beam spot size which takes into account the recording density, system margin and tolerance for manufacturing errors. The beam spot size of an objective lens can be represented by the following formula:

Beam spot diameter ∝ wavelength/NA (NA: aperture number

of objective lens)                                    Formula 1

When the density of an optical disc is increased with its size unchanged, the required beam spot size becomes smaller because the recording mark becomes smaller. Therefore, according to Formula 1, in order to reduce the beam spot size, it is required either to shorten the wavelength or to enlarge the NA or both.

Then, the NA can be represented by the following formula :

NA = Effective radius of objective lens/focal distance

of objective lens ... Formula 2                           Formula 2

According to Formula 2, in order to achieve a large NA, either the effective radius of the objective lens can be increased or the focal distance of the objective lens can be reduced, but if the effective radius is increased, the diameter of the objective lens and other optical components will inevitably increase, resulting in an increased size of the optical pickup device and ensuing disadvantages including a higher price, higher power consumption and exceeding the size limitation of the computer or other applications due to an increased weight; therefore it is more advantageous to reduce the focal distance.

Or if a short working wavelength is determined to reduce the spot size, the refractive index of the material of the objective lens will become high, resulting in a reduced focal distance.

Therefore, usually in a high density optical disc recording/reproducing apparatus, the wavelength is shortened, the NA is increased and the focal distance of the objective lens is reduced.

Further, whereas the distance from the closest face of the objective lens to the optical disc to the surface of the optical disc is usually referred to as the WD (working distance), this factor, though not completely proportional to the focal distance of the lens, tends to become shorter with a decrease in focal distance. Therefore, in a high density optical disc reproducing apparatus, the WD tends to become shorter.

If an optical pickup device is to be further reduced in size with the wavelength and the NA kept unchanged, especially if an optical disc recording/reproducing system is to be made thinner to mount it on a low profile product, such as a laptop personal computer, the effective radius of the beam will have to be reduced. As is evident from Formula 2, the focal distance would become smaller at the rate of reduction of the effective radius. Then, even though it is an optical disc recording/reproducing system of the same recording density, its focal distance will become shorter, and the WD will also become shorter.

When recording or reproduction is to be done onto or from an optical disc (recording medium) with an optical disc recording/reproducing system, an actuator movable part and the objective lens are subjected to focusing control and tracking control according to a prescribed detection signal obtained from the optical disc. If in this process there is a major defect or the like in the optical disc under recording or reproduction and the detection signal is heavily affected, servo may go off, and the actuator movable part may abruptly shift in a direction other than the prescribed and at a speed beyond the prescribed. If then the system is a high density or small and thin optical pickup device, the objective lens may hit against the optical disc.

Even if there is no major defect in the optical disc, if the vibration due to any geometrical deformation of or density imbalance in the optical disc, the vibration due to the state in which the apparatus is installed, or the impact or vibration working from outside on the apparatus accelerates very significantly, a similar phenomenon will arise.

If then the objective lens hits against the optical disc turning at high speed, the objective lens may be damaged, or the dust resulting from scratching the optical disc may stick to the surface of the objective lens, which could cause trouble to subsequent recording and/or reproduction.

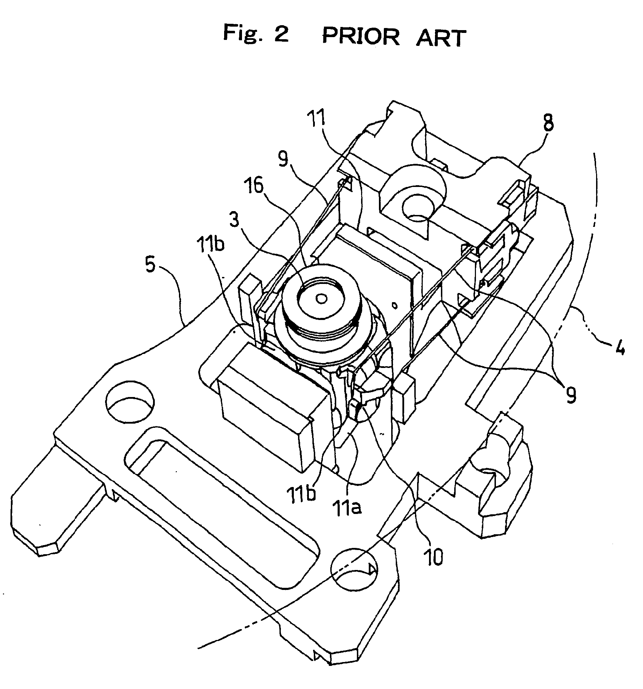

As shown in Fig 2, Fig 3 and Figs 4, for the objective lens 3 of the conventional optical disc recording/reproducing apparatus 1, a ring-shaped buffer 16 is fitted with an adhesive or otherwise to the face of the tube 14 opposite an optical disc 4 (Fig 4A) or to the top face of the peripheral part 12a of the objective lens 12. This prevents the optical disc 4 from coming into direct contact with the objective lens 3 or, even if it does come into contact, the lens 12 or the lens 15A constituting the objective lens 3 from being damaged or the optical disc 4 from being scratched. The buffer 16 is shaped in a ring because this shape facilitates fitting of the buffer 16 and makes it possible to secure an appropriate WD by minimizing the error of fitting height (e.g. see the Japanese Patent Application Laid-Open No. 5-144041).

In recent years, with a view to further increasing the density of data to be recorded, a large capacity optical disc reproducing apparatus of the next generation has come to be studied, which is to use a blue laser beam of 405 nm in laser wavelength and capable of recording high resolution video images for two hours. The aperture number (NA) of an objective lens using a blue laser beam has to be 0.7 or more, and along with that the WD should be extremely shortened, to 0.51 mm or less (e.g. 0.24 mm).

When the optical disc is turned at high speed to record or read out data, the air adjoining the optical disc will be taken around along with the rotation of the optical disc, and a high speed air flow will arise in the narrow gap (WD) between the optical disc and the objective lens, and the pressure drops in this gap.

In this case of the prior art in which the ring-shaped protecting member is arranged on the face of the objective lens opposite the optical disc, if the gap (WD) between the objective lens and the optical disc is narrow, the flow rate of air in the narrow part will rise with the rotation of the optical disc, resulting in a reduced pressure, which may cause the objective lens to be sucked toward the optical disc (in the direction of arrows H in Figs 4). In the large capacity optical disc reproducing apparatus of the next generation, which is to use a blue laser beam of 405 nm in wavelength, the WD will be short, and the pressure drop will tend to be greater.

This would give rise to problems such as the obstruction of appropriate focusing control and tracking control, an increased frequency of contact with the optical disc to invite damaging of the objective lens, damaging of the optical disc by scratching of its surface or sticking of the dust of scratching to the objective lens to invite functional trouble.

[Disclosure of the Invention]

As one of the problems to be solved by the present invention, the above-described problem can be cited as an example.

In order to solve the problem noted above, according to one aspect of the invention, an optical disc reproducing apparatus for reading out data optically recorded on the optical disc via an objective lens provided with a ring-shaped lens protecting part arranged opposite an optical disc and protruding toward the optical disc, the lens protecting part is characterized in that at least one concave or concaves for establishing communication between the inside and the outside of the ring is or are formed therein.

In order to solve the problem noted above, according to another aspect of the invention, an obj ective lens for reading out data optically recorded on an optical disc, the objective lens being provided with a lens protecting part arranged opposite the optical disc, is characterized in that the lens protecting part is formed in a ring-shape protruding toward the optical disc and at least one concave or concaves for establishing communication between the inside and the outside of the ring is or are formed therein.

The concave or concaves of the lens protecting part is or are characterized by being disposed in a direction tangential to the optical disc and orthogonal to the tracking direction so as to bisect the face of the lens protecting part opposite the optical disc.

In order to solve the problem noted above, according to still another aspect of the invention, a lens protecting part is characterized in that it is disposed on a face of an objective lens, for optically reading out data recorded on an optical disc, opposite the optical disc, is formed in a ring shape protruding toward the optical disc, and has at least one concave or concaves for establishing communication between the inside and the outside of the ring being formed therein.

The concave or concaves of the lens protecting part is or are characterized by being disposed in a direction parallel to a tangent to the optical disc and orthogonal to the tracking direction so as to bisect the face of the lens protecting part opposite the optical disc.

In order to solve the problem noted above, according to still another aspect of the invention, an optical disc reproducing method for reading out data optically recorded on an optical disc via an obj ective lens provided with a ring-shaped lens protecting part opposite the optical disc and protruding toward the optical disc is characterized in that at least one concave or concaves for establishing communication between the inside and the outside of the ring is or are formed in the lens protecting part, and the pressures inside and outside the ring are equalized to prevent the optical disc and the objective lens from coming into contact with each other.

[Brief Description of the Drawings]

Fig 1A is a plan of the essential part showing a schematic configuration of an optical disc reproducing apparatus;
Fig 1B is a perspective view showing a schematic configuration of an actuator;
Fig 2 is a perspective view of the actuator;
Fig 3 is an exploded perspective view of the essential part of the actuator;
Fig 4A is a vertical section of an objective lens and a lens protecting part configured of two lenses built into a tube;
Fig 4B is a vertical section of a single objective lens and a lens protecting part;
Fig 5, pertaining to a first embodiment for carrying out the invention, is a perspective view of an actuator;
Fig 6, pertaining to the first embodiment for carrying out the invention, is a vertical section of an objective lens configured of double lenses and a lens protecting part;
Fig 7, pertaining to the first embodiment of the invention, is a perspective view of an obj ective lens configured of double lenses and a lens protecting part;
Fig 8, pertaining to the first embodiment of the invention, is a plan of the essential part showing a schematic configuration of an optical disc reproducing apparatus;
Fig 9, pertaining to a second embodiment for carrying out the invention, is a perspective view of a single objective lens and a lens protecting part;
Fig 10, pertaining to a third embodiment for carrying out the invention, is a perspective view of an objective lens configured of double lenses and a pair of circular lens protecting parts;
Fig 11, pertaining to a fourth embodiment for carrying out the invention, is a perspective view of a single objective lens and a pair of circular lens protecting parts;
Fig 12A pertains to a fifth embodiment for carrying out the invention, showing a perspective view of a lens protecting part formed integrally with a single objective lens;
Fig 12B pertains to a fifth embodiment for carrying out the invention, showing a perspective view showing a vertical section, of a lens protecting part formed integrally with a single objective lens;
Fig 13A pertains to a sixth embodiment for carrying out the invention, showing a perspective view, and (B) showing a vertical section, of a lens protecting part formed integrally with a tube;
Fig 13B pertains to a sixth embodiment for carrying out the invention, showing a vertical section, of a lens protecting part formed integrally with a tube;
Fig 14, pertaining to a seventh embodiment for carrying out the invention, is a perspective view of a lens protecting part in which a concave is formed in one position;

Fig 15, pertaining to an eighth embodiment for carrying out the invention, is a perspective view of a lens protecting part in which one position is cut off to form a C shape;

Fig 16, pertaining to a ninth embodiment for carrying out the invention, is a perspective view of a lens protecting part in which substantially V-shaped concaves are formed in two positions;

Fig 17, pertaining to a 10th embodiment for carrying out the invention, is a perspective view of a lens protecting part in which concaves are formed in four positions; and

Fig 18, pertaining to an 11th embodiment for carrying out the invention, is a perspective view of a lens protecting part in which paired concaves are formed in a total of four positions along the circumference.

[Best Mode for Carrying Out the Invention]

Embodiments for carrying out the present invention will be described in detail below with reference to drawings.

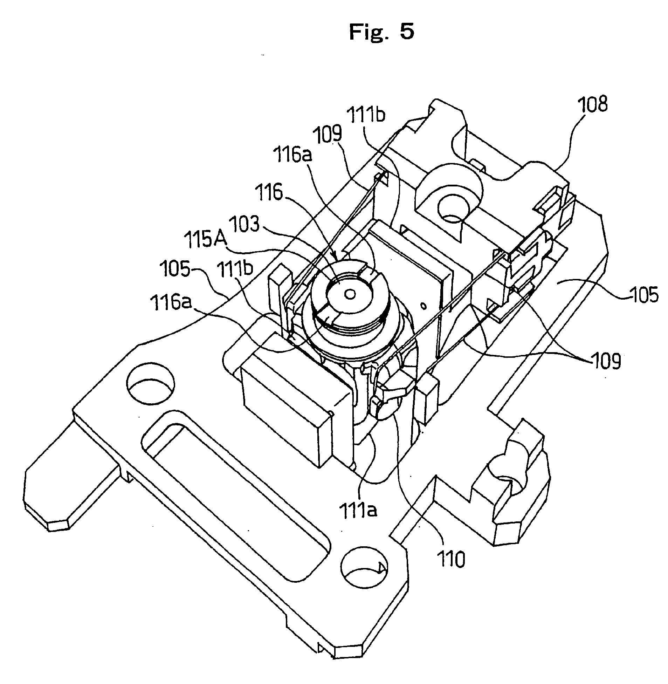

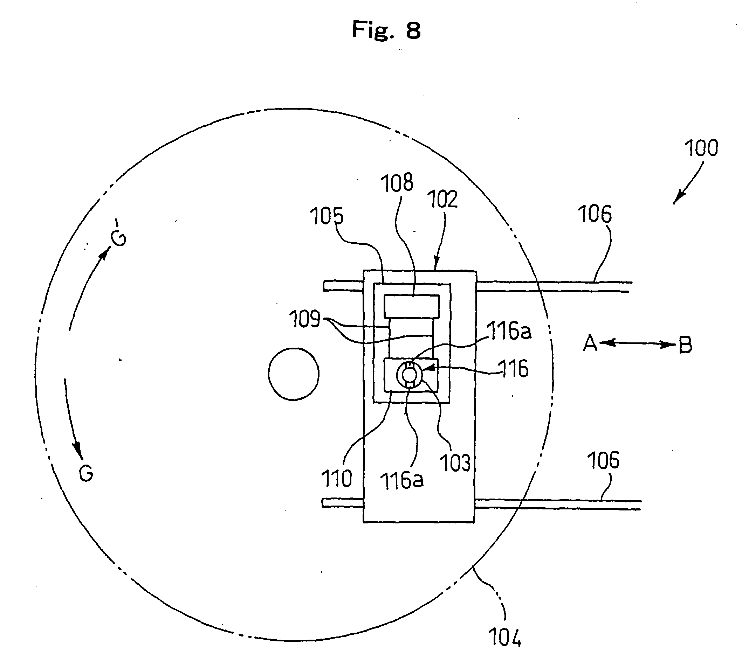

As shown in Fig 5 and Fig 8, an optical disc reproducing apparatus 100 pertaining to the first embodiment for carrying out the invention causes a blue laser beam of 405 nm in wavelength emitted from a laser generating device (not shown), such as a semiconductor laser oscillator, to be converged by an obj ective lens 103 disposed in a movable part 110, and irradiates an optical disc recording medium 104 to record data or to read out recorded data.

As shown in Fig 8, substantially at the center of the base (not shown) of the optical disc reproducing apparatus 100, there is disposed a spindle motor (not shown). The optical disc recording medium 104 is fitted to a disk table (not shown) fixed to the rotation shaft of the spindle motor, and enabled to turn in the direction of arrow G (or the direction of G') at a prescribed rotating speed.

Two guide shafts 106 are arranged on the base in parallel to the radial direction of the optical disc recording medium 104. A pickup body 102 is slidably disposed on the two guide shafts 106 and, guided by the guide shafts 106, can shift in the radial direction of the optical disc recording medium 104 which is in the form of an optical disc (direction of arrow A or B).

As shown in Fig 5 and Fig 8, a yoke 105 is fixed to the pickup body 102, and to the yoke 105 is fixed a fixed part 108, which is shifted in the direction of arrow A or B together with the pickup body 102. To the fixed part 108 are firmly stuck four supporting springs 109 in the horizontal direction. At the tips of the four supporting springs 109 is arranged the movable part 110, which are supported by the supporting springs 109 to be oscillatable in the tracking direction (the direction of arrow A or B) and the focusing direction (the direction of toward or away from the optical disc recording medium 104).

On the movable part 110, there is arranged the obj ective lens 103 opposite the recording face of the optical disc recording medium 104; underneath the objective lens 103 is arranged a raising mirror (not shown), and a laser beam, which may be blue for instance, emitted from a laser generating device (not shown) is reflected by the raising mirror and comes incident on the objective lens 103. The luminous flux of the laser beam is narrowed down by the objective lens 103 to focus on the recording face of the optical disc recording medium 104.

At the time of recording data, the recording face of the optical disc recording medium 104 is irradiated with the laser beam, and the data are recorded as pits. Data recorded thereon are read out by irradiating a pit formed in the recording face of the optical disc recording medium 104 with the laser beam, detecting the reflected beam from the pit with a photosensor (not shown) via the objective lens 103 and the raising mirror, and converting it into electric signals.

As shown in Fig 5, a focusing coil 111a is arranged underneath the movable part 110, and a tracking coil 111b is arranged beside it. Focusing control is accomplished by electrifying the focusing coil 111a as required, slightly shifting the movable part 110 in the direction toward or away from the optical disc recording medium 104, and accurately focusing on a pit formed in the optical disc recording medium 104. Similarly, tracking control is accomplished by electrifying the tracking coil 111b, slightly shifting the movable part 110 in the radial direction of the optical disc recording medium 104, and irradiating the center of the pit in its widthwise direction with the blue laser beam.

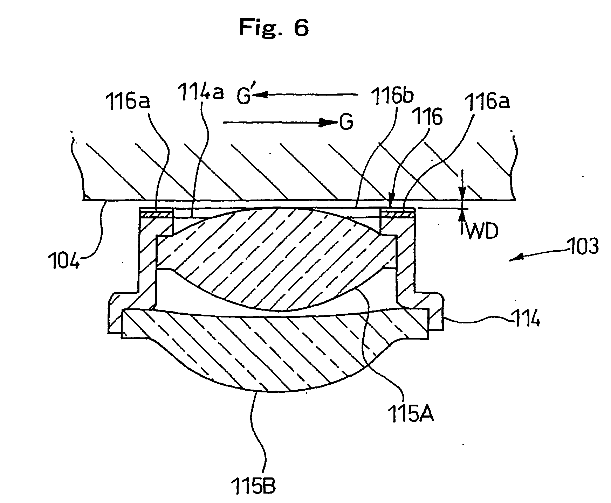

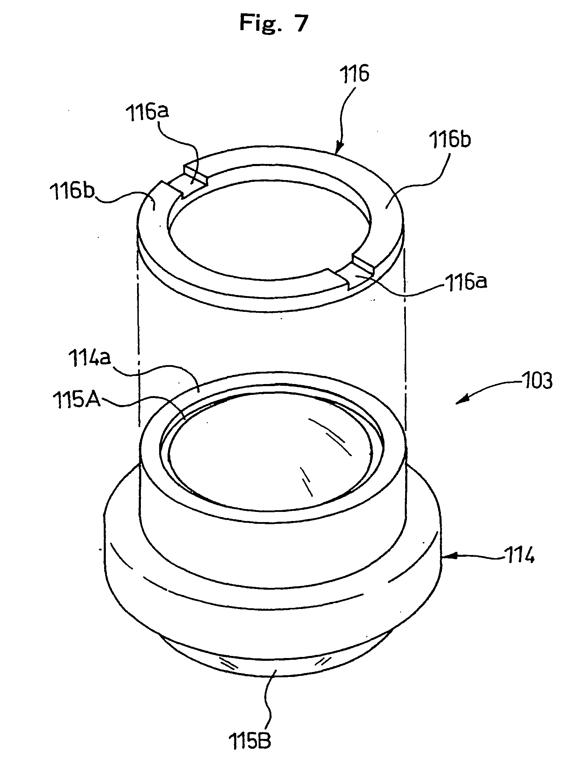

As shown in Fig 6 and Fig 7, the objective lens 103 is configured of two lenses 115A and 115B fabricated of transparent glass, plastic or the like into a mirror tube 114 formed of metals, plastic or the like.

To the top face 114a of the tube 114 (the face opposite the optical disc recording medium 104) is firmly stuck a protecting part 116 with an adhesive or otherwise. The tube 114 may be structurally integrated with the lens 115A or the lens 115B.

The protecting part 116 is a member formed in a substantially ring shape of, for instance, Teflon (registered trademark), nylon, elastomer, unwoven cloth or the like, and has concaves 116a formed in two positions in the diametric direction in the face opposite the optical disc recordingmedium 104.

Therefore, the inside and the outside of the ring-shaped protecting part 116 communicate with each other via the concaves 116a.

As shown in Fig 8, the concaves 116a are so arranged as to be tangential to the optical disc recording medium 104 and orthogonal to the tracking direction.

As shown in Fig 6, the top face 116b of the protecting part 116 is at least as high as or higher than the top face of the lens 115A, and is intended to protect the objective lens 103.

The gap (WD) between the objective lens 103 using a blue laser beam of 405 nm in wavelength, for instance, and the optical disc recording medium 104 is very short, only about 0.24 mm.

Should the protecting part 116 and the optical disc recording medium 104 come into contact with each other, the optical disc recording medium 104 and the lens 115A could be prevented from being damaged because the protecting part 116 is small in friction coefficient and formed of a soft material.

When the optical disc recording medium 104 is turned to record data onto or reading data recorded on the optical disc recording medium 104, the air surrounding the optical disc recording medium 104 is taken around along with the rotation. This causes a high speed air flow to occur between the optical disc recording medium 104 and the objective lens 103 with only a very short WD in-between, and a negative pressure is generated.

However, as the ring-shaped protecting part 116 is provided with the concaves 116a in a direction tangential to the optical disc recording medium 104 and orthogonal to the tracking direction and communicates with the outside, no significant increase in flow rate occurs in the narrow gap, the negative pressure is kept to the minimum, and the pressures in and out of the protecting part 116 become substantially the same.

Therefore, the objective lens 103 is not sucked toward the optical disc recording medium 104, and the objective lens 103 and the optical disc recording medium 104 can be prevented from coming into contact with each other.

Also, the impact of the negative pressure that is generated on focusing control and tracking control can be minimized to make possible highly accurate data recording and reproduction.

To add, the formation of the concaves 116a in a direction tangential to the optical disc recording medium 104 and orthogonal to the tracking direction is intended to enable the air flow taken around along with the rotation of the optical disc recording medium 104 to readily flow from the outside into the inside of, and from the inside to the outside of, the ring-shaped protecting part 116 via the concaves 116a and thereby to equalize the pressures in and out of the ring-shaped protecting part 116.

Next will be described reproduction from the optical disc pertaining to the second embodiment for carrying out the invention.

Incidentally in the following description, since other parts than the objective lens are the same as in the optical disc reproducing apparatus 100 in the first embodiment for implementation described with reference to Fig 5 and Fig 8, the description of the other parts than the objective lens will be dispensed with.

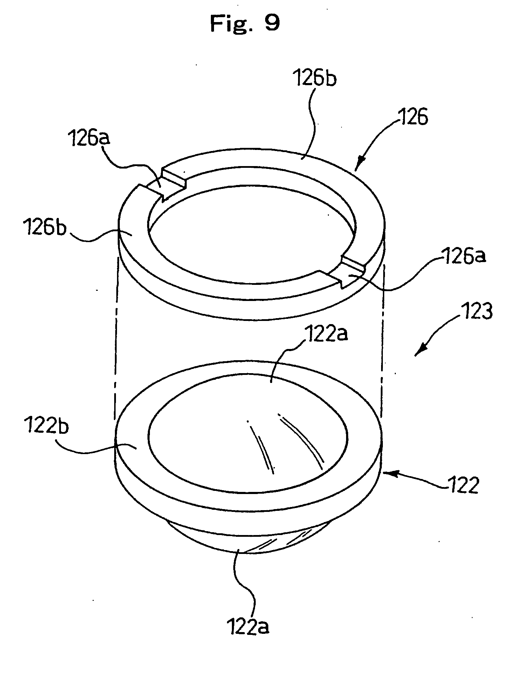

As shown in Fig 9, an objective lens 123 in the second embodiment for implementation is configured as a single lens formed of glass, transparent plastic or the like. Thus the central part 122a of an objective lens 122 is formed in a curved shape having a prescribed radius of curvature so as to serve as a lens. A ring-shaped flat part 122b is formed in the circumferential part. To the ring-shaped flat part 122b is firmly stuck a ring-shaped protecting part 126 with an adhesive or otherwise.

The protecting part 126 is a member formed in a substantially ring shape of, for instance, Teflon (registered trademark), nylon, elastomer, unwoven cloth or the like, and has concaves 126a formed in two positions in the diametric direction in the face opposite the optical disc recording medium 104. Therefore, the top face 126b of the ring-shapedprotecting part 126 is bisected by the concaves 126a, and the inside and the outside of the ring communicate with each other via the concaves 126a. The concaves 126a are arranged in a movable part (not shown) in a direction tangential to the optical disc recording medium 104 and orthogonal to the tracking direction.

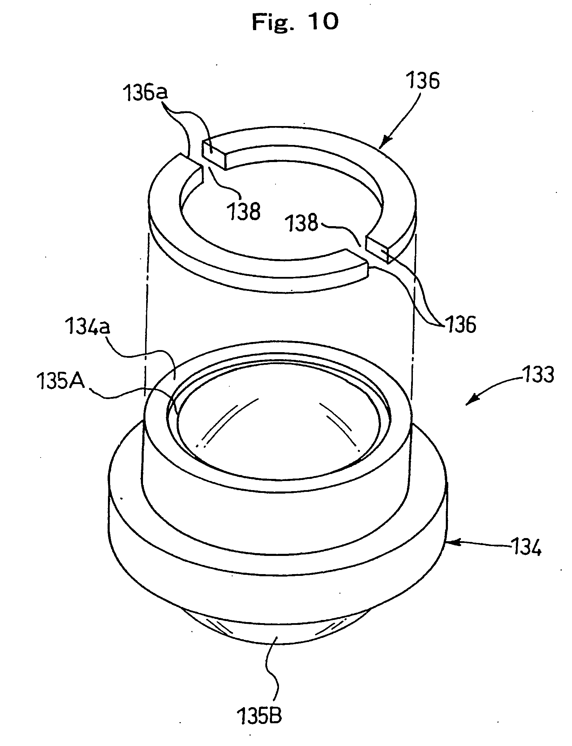

As shown in Figs 10, an objective lens 133 in the third embodiment for implementation has a configuration in which two lenses 135A and 135B formed of glass, transparent plastic or the like are built into a tube 134 formed of ceramic, aluminum, magnesium, bronze, zinc, nickel, an alloy thereof or the like. To a face 134a of the tube 134 opposite the optical disc recording medium 104 are firmly stuck with an adhesive or otherwise a pair of circular protecting parts 136 to constitute a substantial circle. The mutually opposite end faces 136a of the pair of protecting parts 136 are so arranged as to be away from each other, and two gaps 138 are formed between the end faces 136a. The inside and the outside of the pair of protecting parts 136 arranged in a substantially circular shape communicate with each other via the two gaps 138. The gaps 138 are arranged in a movable part in a direction tangential to the optical disc recording medium 104 and orthogonal to the tracking direction.

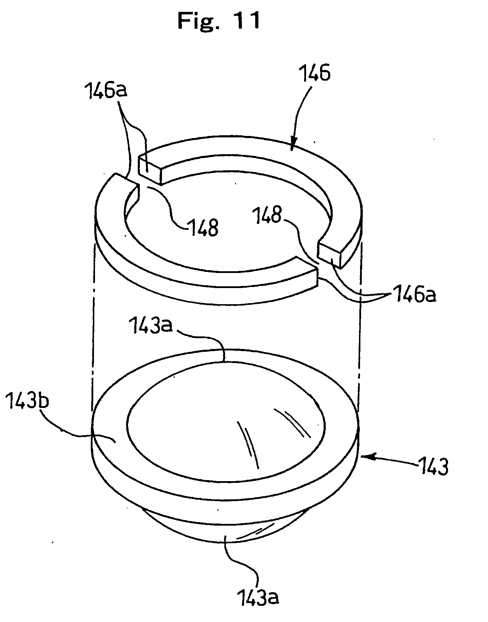

As shown in Fig 11, an objective lens 143 in the fourth embodiment for implementation is configured of a single lens formed of glass, transparent plastic or the like.

Thus, the central part 143a of an objective lens 143 is formed in a curved shape having a prescribed radius of curvature so as to serve as a lens. In the circumferential part is formed a ring-shaped flat part 143b. To the ring-shaped flat part 143b are firmly stuck a pair of circular protecting parts 146 with an adhesive or otherwise to constitute a substantial circle. The mutually opposite end faces 146a of the pair of protecting parts 146 are so arranged as to be away from each other, and two gaps 148 are formed between them. The inside and the outside of the pair of protecting parts 146 arranged in a substantially circular shape communicate with each other via the gaps 148. The gaps 148 are arranged in a movable part in a direction tangential to the optical disc recording medium 104 and orthogonal to the tracking direction.

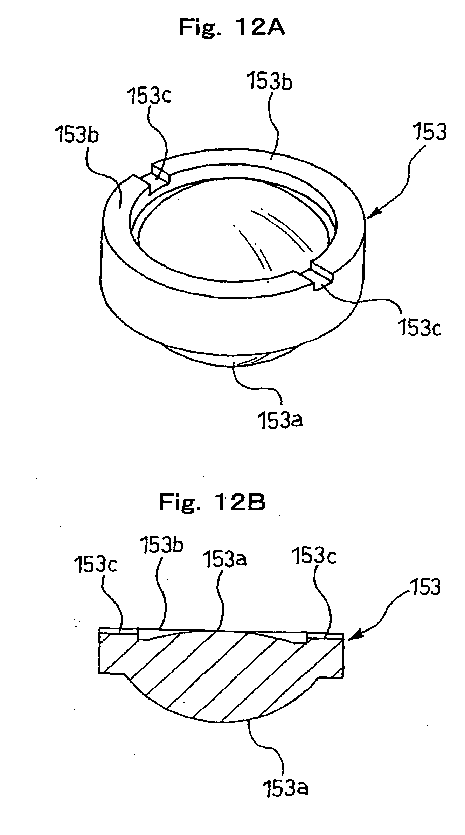

As shown in Figs 12, an objective lens 153 in the fifth embodiment for implementation is configured of a single lens formed of transparent plastic or the like.

Thus, the central part of the obj ective lens 153 is formed in a curved shape having a prescribed radius of curvature, and a lens part 153a is formed there. The circumferential part of the lens part 153a is raised in a ring shape to the same height as the lens part 153a, and on the top face is formed a ring-shaped flat part 153b. In the ring-shaped flat part 153b, substantially U-shaped concaves 153c are formed in two positions in the diametric direction. The concaves 153c are arranged in a movable part in a direction parallel to a tangent to the optical disc recording medium 104 and orthogonal to the tracking direction. In this embodiment for implementation, the obj ective lens and the protecting part are integrally molded of the same material, and the ring-shaped flat part 153b serves as the protecting part. Further, since the objective lens 153 in this embodiment for implementation permits mass production by injection molding or otherwise, the objective lens 153 can be fabricated inexpensively.

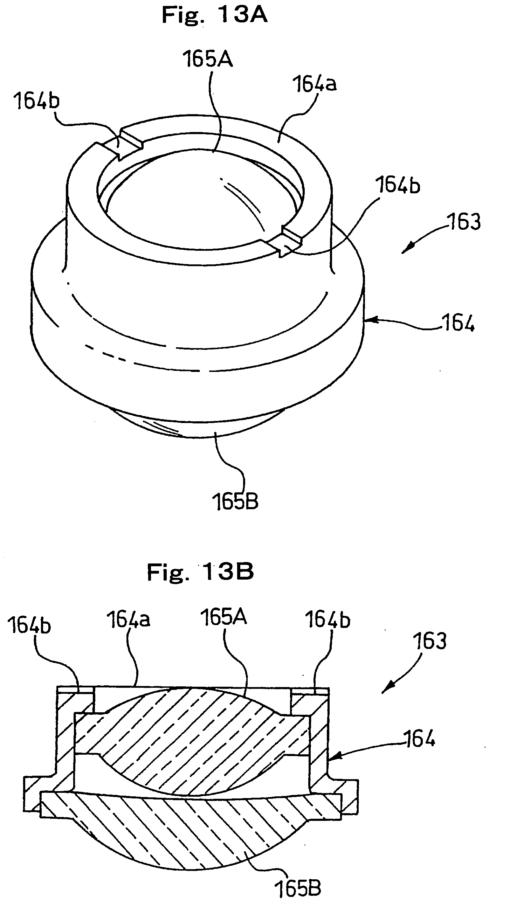

As shown in Figs 13, an objective lens 163 in the sixth embodiment for implementation has a configuration in which two lenses 165A and 165B formed of glass, transparent plastic or the like are built into a tube 164 formed of ceramic, aluminum, magnesium, bronze, zinc, nickel, an alloy thereof or the like. A face 164a of the tube 164 opposite the optical disc recording medium 104 (the top face) is set to be as high as the lens 165A, and in the top face 164a are formed substantially U-shaped concaves 164b in two positions in the diametric direction. The concaves 164b are arranged in a movable part in a direction parallel to a tangent to the optical disc recording medium 104 and orthogonal to the tracking direction.

In this embodiment for implementation, a protecting part is integrally formed with the top face 164a of the tube 164 of the objective lens 163, and the top face 164a of the tube 164 serves as the protecting part.

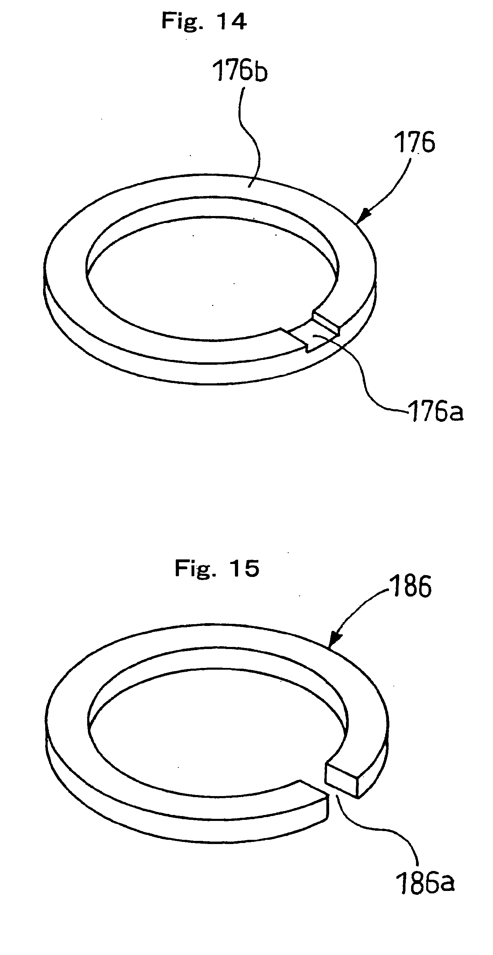

As shown in Fig 14, a protecting part 176 in the seventh embodiment for implementation is a member formed in a substantially ring shape of, for instance, Teflon (registered trademark), nylon, elastomer, unwoven cloth or the like, and in part of the surface 176b (the face opposite the optical disc recording medium 104) isformedasubstantiallyU-shapedconcave 176a in one position, via which the inside and the outside of the ring-shaped protecting part 176 communicate with each other. The protecting part 176, like the protecting part 116 or 126 shown in Fig 7 or Fig 9, respectively, is firmly stuck to the tube or the circumferential part of the single lens with an adhesive or otherwise.

As shown in Fig 15, a protecting part 186 in the eighth embodiment for implementation is formed in a substantially C shape having a gap 18 6a provided in one position of, for instance, Teflon (registered trademark), nylon, elastomer, unwoven cloth or the like. Communication is established by the gap 186a between the inside and the outside of the protecting part 186. The protecting part 186, like the protecting part 116 or 126 shown in Fig 7 or Fig 9, respectively, is firmly stuck to the top face of the tube or the circumferential flat part of the single lens with an adhesive or otherwise.

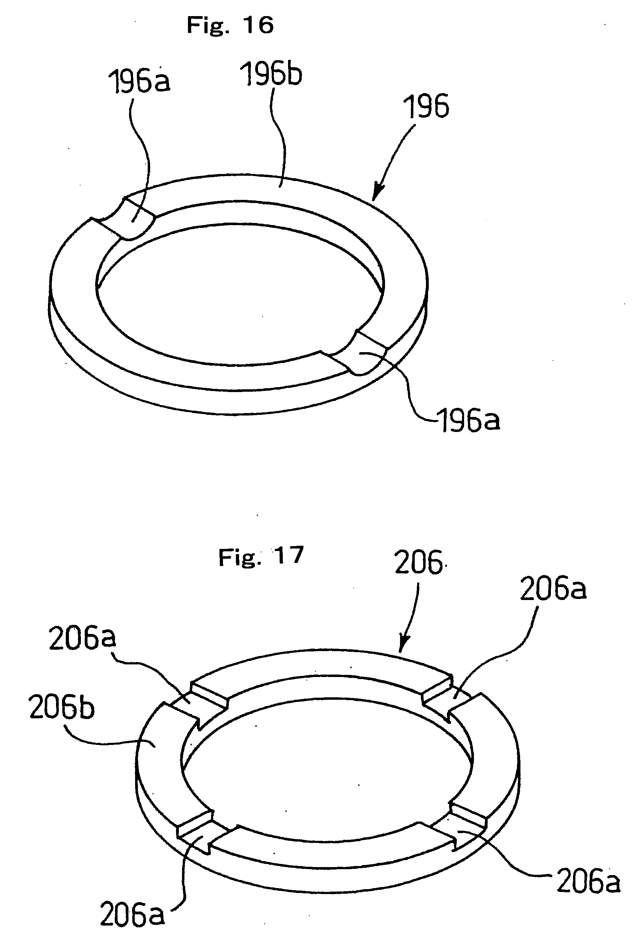

As shown in Fig 16, a protecting part 196 in the ninth embodiment for implementation is a member formed in a substantially ring shape of, for instance, Teflon (registered trademark), nylon, elastomer, unwoven cloth or the like, and in the surface 196b (the face opposite the optical disc recording medium 104) are formed substantially V-shaped concaves 196a in two positions in the diametric direction to establish communication between the inside and the outside of the ring-shaped protecting part 196. The protecting part 196, like the protecting part 116 or 126 shown in Fig 7 or Fig 9, respectively, is firmly stuck to the tube or the circumferential part of the single lens with an adhesive or otherwise. Incidentally, the shape of concaves is not limited to substantially U or V shapes, but can be any shape that can effectively establish communication between the inside and the outside of the protecting part.

As shown in Fig 17, a protecting part 206 in the 10th embodiment for implementation is a member formed in a substantially ring shape of, for instance, Teflon (registered trademark), nylon, elastomer, unwoven cloth or the like, and in the surface 206b (the face opposite the optical disc recording medium 104) are formed substantially U-shaped concaves 206a in four positions at 90° intervals to establish communication between the inside and the outside of the ring-shaped protecting part 206. The protecting part 206, like the protecting part 116 or 126 shown in Fig 7 or Fig 9, respectively, is firmly stuck to the tube or the circumferential part of the single lens with an adhesive or otherwise.

Incidentally the number of concaves is not limited to two or four, but can be increased or decreased as appropriate so as to effectively establish communication between the inside and the outside of the protecting part.

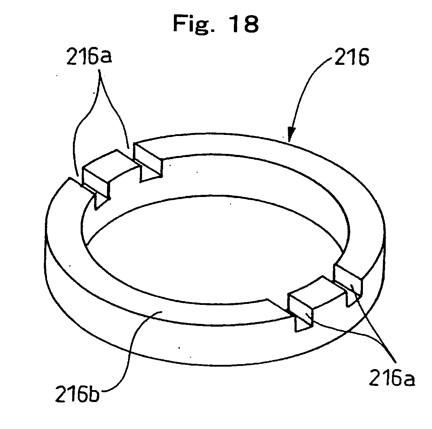

As shown in Fig 18, a protecting part 216 in the 11th embodiment for implementation is a member formed in a substantially ring shape of, for instance, Teflon (registered trademark), nylon, elastomer, unwoven cloth or the like, and in the surface 216b (the face opposite the optical disc recording medium 104) are formed pairs of substantially U-shaped concaves 216a in a total of four positions in the radial direction to establish communication between the inside and the outside of the ring-shaped protecting part 216. The protecting part 216, like the protecting part 116 or 126 shown in Fig 7 or Fig 9, respectively, is firmly stuck to the tube or the circumferential part of the single lens with an adhesive or otherwise.

In the optical disc reproducing apparatus in each of the embodiments for implementation, a ring-shaped lens protecting part is provided on the surface of the objective lens opposite the optical disc recording medium. In each lens protecting part, to establish communication between the inside and the outside of the ring, concaves are formed in a direction parallel to a tangent to the optical disc recording medium and orthogonal to the tracking direction.

For this reason, the pressure difference is extremely small between the inside and the outside of the ring-shaped lens protecting part. Therefore, the objective lens is not sucked toward the optical disc recording medium by a drop in pressure.

This enables the optical disc recording medium and the lens protecting part to be prevented from coming into contact with each other, and accordingly to avoid injuring of the objective lens by the contact, damaging of the optical disc recording medium by scratching of its surface or sticking of the dust of scratching to the obj ective lens to invite functional trouble.

Furthermore, as the impact on the focusing control and tracking control of the objective lens can be completely eliminated, proper focusing control and tracking control can be readily accomplished, making possible highly reliable recording and reading-out of data.

To sum up the contents hitherto stated, the optical disc reproducing apparatus 100 optically records data onto or read data recorded on the optical disc recording medium 104 via the objective lens 103, 123, 133, 143, 153 or 163 provided with the ring-shaped lens protecting part 116, 126, 136, 146, 153b, 164a, 176, 186, 196 or 206 disposed opposite and protruding toward the optical disc recording medium 104. In this optical disc reproducing apparatus 100, at least one concave or concaves 116a, 126a, 138, 148, 153c, 164b, 176a, 186a, 196a, 206a or 216a for establishing communication between the inside and the outside of the ring is or are formed in the lens protecting part 116, 126, 136, 146, 153b, 164a, 176, 186, 196, 206 or 216.

The objective lens 103, 123, 133, 143, 153 or 163 for recording data onto or reading data optically recorded on the optical disc recording medium 104 is provided with the lens protecting part 116, 126, 136, 146, 153b, 164a, 176, 186, 196, 206 or 216 disposed opposite the optical disc recording medium 104. In the lens protecting part 116, 126, 136, 146, 153b, 164a, 176, 186, 196, 206 or 216, which is formed in a ring shape protruding toward the optical disc recording medium 104, at least one concave or concaves 116a, 126a, 138, 148, 153c, 164b, 176a, 186a, 196a, 206a or 216a for establishing communication between the inside and the outside of the ring is or are formed.

The lens protecting part 116, 126, 136, 146, 153b, 164a, 176, 186, 196, 206 or 216 is disposed on the face of the objective lens 103, 123, 133, 143, 153 or 163, which is for recording data onto or reading data optically recorded on the optical disc recording medium 104, opposite the optical disc recording medium 104, is formed in a ring shape protruding toward the optical disc recording medium 104, and has at least one concave or concaves 116a, 126a, 138, 148, 153c, 164b, 176a, 186a, 196a, 206a or 216a formed therein to establish communication between the inside and the outside of the ring.

By the optical disc reproducing method in each of the embodiments for implementation, data are optically recorded onto the optical disc recording medium 104 or data recorded thereon are read out via the objective lens 103, 123, 133, 143, 153 or 163 provided with the ring-shaped lens protecting part 116, 126, 136, 146, 153b, 164a, 176, 186, 196, 206 or 216 disposed opposite and protruding toward the optical disc recordingmedium 104, wherein at least one concave or concaves 116a, 126a, 138, 148, 153c, 164b, 176a, 186a, 196a, 206a or 216a for establishing communication between the inside and the outside of the ring is or are formed in the lens protecting part 116, 126, 136, 146, 153b, 164a, 176, 186, 196, 206 or 216 to equalize the pressures inside and outside the ring, and the optical disc recording medium 104 and the obj ective lens 103, 123, 133, 143, 153 or 163 are prevented from coming into contact with each other.

To add, the optical disc reproducing apparatus, the objective lens, the protecting member and the optical disc reproducing method according to the invention are not limited to the embodiments for implementation described above, but permit modifications, improvements or other changes as appropriate. For instance, although the lens protecting part in some of the above-described embodiments for implementation is supposed to be integrally molded with a ring-shaped member formed of Teflon (registered trademark), nylon, elastomer, unwoven cloth or the like or with the objective lens, it could as well be formed by printing on or transferring onto the tube or the circumferential flat part of the objective lens.

Also, the materials, shapes, dimensions, forms, numbers, positions of arrangement and other factors of the optical disc, lens protecting part, objective lens, concaves and the like, examples of which are described in connection with the above-described embodiments for implementation, are not limited to what were stated above, but any other alternatives can be used if they enable the present invention to be implemented.

Further, the invention is not limited to the above-described embodiments for implementation, which were cited merely as examples. Any embodiment in which substantially the same configuration as the technical ideas stated in the claims for the invention and which would provide similar effects and advantages is covered by the technical scope of the invention.

All the disclosures in the Japanese Patent Application (No. 2002-285243) filed on September 30, 2002, including its specification, claims, drawings and abstract, are hereby incorporated by reference into this application in its entirety.

## EP 1 548 717 A1

**Claims**

1. An optical disc reproducing apparatus for reading out data optically recorded on an optical disc via an objective lens provided with a ring-shaped lens protecting part arranged opposite said optical disc and protruding toward said optical disc, **characterized in that**:

   at least one concave or concaves for establishing communication between the inside and the outside of said ring is or are formed in said lens protecting part.

2. The optical disc reproducing apparatus according to claim 1, **characterized in that** said concave or concaves of said lens protecting part is or are disposed in a direction tangential to said optical disc and orthogonal to the tracking direction so as to bisect the face of said lens protecting part opposite said optical disc.

3. An obj ective lens for reading out data optically recorded on an optical disc, the objective lens being provided with a lens protecting part arranged opposite said optical disc, **characterized in that** said lens protecting part is formed in a ring-shape protruding toward said optical disc and at least one concave or concaves for establishing communication between the inside and the outside of said ring is or are formed therein.

4. The objective lens according to claim 3, **characterized in that** said concave or concaves of said lens protecting part is or are disposed in a direction tangential to said optical disc and orthogonal to the tracking direction so as to bisect the face of said lens protecting part opposite said optical disc.

5. A lens protecting part disposed on a face of an obj ective lens, for optically reading out data recorded on an optical disc, opposite said optical disc, formed in a ring shape protruding toward said optical disc, and **characterized in that** at least one concave or concaves for establishing communication between the inside and the outside of said ring is or are formed therein.

6. The lens protecting part according to claim 5, **characterized in that** said concave or concaves is or are disposed in a direction parallel to a tangent to said optical disc and orthogonal to the tracking direction so as to bisect the face of said lens protecting part opposite said optical disc.

7. An optical disc reproducing method for reading out data optically recorded on an optical disc via an objective lens provided with a ring-shaped lens protecting part opposite said optical disc and protruding toward said optical disc, **characterized in that**:

   at least one concave or concaves for establishing communication between the inside and the outside of said ring is or are formed in said lens protecting part, and the pressures inside and outside the ring are equalized to prevent the optical disc and said objective lens from coming into contact with each other.

Fig. 1A  PRIOR ART

Fig. 1B  PRIOR ART

Fig. 2   PRIOR ART

Fig. 3   PRIOR  ART

Fig. 4A    PRIOR  ART

G′

16

G

4

14

H

WD

13

15A

15B

Fig. 4B    PRIOR  ART

G′

12a

16

G

4

H

WD

12

Fig. 5

## Fig. 6

## Fig. 7

Fig. 8

# Fig. 9

## Fig. 10

Fig. 11

## Fig. 12A

## Fig. 12B

## Fig. 13A

## Fig. 13B

## Fig. 14

176b

176

176a

## Fig. 15

186

186a

Fig. 16

Fig. 17

Fig. 18

216a

216

216a

216b

# INTERNATIONAL SEARCH REPORT

| International application No. |
|---|
| PCT/JP03/12428 |

**A. CLASSIFICATION OF SUBJECT MATTER**
Int.Cl$^7$ G11B7/09, 7/12

According to International Patent Classification (IPC) or to both national classification and IPC

**B. FIELDS SEARCHED**

Minimum documentation searched (classification system followed by classification symbols)
Int.Cl$^7$ G11B7/09, 7/095, 7/12

Documentation searched other than minimum documentation to the extent that such documents are included in the fields searched
| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 195673/1984(Laid-open No. 111029/1986) (Sony Corp.), 14 July, 1986 (14.07.86), Full text; Figs. 1 to 12 (Family: none) | 1–7 |
| X | Microfilm of the specification and drawings annexed to the request of Japanese Utility Model Application No. 34603/1990(Laid-open No. 124330/1991) (Toshiba Corp.), 17 December, 1991 (17.12.91), Full text; Figs. 1 to 7 (Family: none) | 1–7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 October, 2003 (23.10.03) | 11 November, 2003 (11.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/12428 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2002-25094 A  (Pioneer Electronic Corp.),<br>25 January, 2002 (25.01.02),<br>Full text; Figs. 1 to 20<br>& EP 1170736 A2        & CN 1337686 A<br>& US 2002/39342 A1 | 1-7 |
| X | JP 2002-222535 A  (Sony Corp.),<br>09 August, 2002 (09.08.02),<br>Full text; Figs. 1 to 24<br>& US 2002/60974 A1        & EP 1209670 A2<br>& CN 1357883 A | 1-7 |

Form PCT/ISA/210 (continuation of second sheet) (July 1998)